# EUROPEAN PATENT SPECIFICATION

(11) **EP 0 904 484 B1**
(45) Date of publication and mention of the grant of the patent: **04.04.2001**
(21) Application number: 97928423.9
(22) Date of filing: 13.06.1997
(51) Int. Cl.: F02D 19/10

(54) **METHOD OF CONTROLLING INJECTION OF A DUAL-FUEL DIESEL-GAS ENGINE INJECTION SYSTEM, AND RELATIVE INJECTION SYSTEM**
VERFAHREN ZUR STEUERUNG DES EINSPRITZSYSTEMS EINER DIESEL-GAS BRENNKRAFTMASCHINE UND ENTSPRECHENDES EINSPRITZSYSTEM
PROCEDE DE COMMANDE DE L'INJECTION DANS UN SYSTEME D'INJECTION DE MOTEUR MIXTE DIESEL ET GAZ ET SYSTEME D'INJECTION

(30) Priority: 14.06.1996 IT TO960515
(43) Date of publication of application: 31.03.1999
(73) Proprietor: C.R.F. Societa' Consortile per Azioni, 10043 Orbassano (Torino) (IT)
(72) Inventor: BASSI, Aldo, I-20155 Milano (IT); RINOLFI, Rinaldo, I-10024 Moncalieri (IT)
(74) Representative: Jorio, Paolo
(86) International application number: IT9700134
(87) International publication number: WO9747867

(56) References cited:
- EP-A- 0 133 777
- US-A- 4 463 734
- US-A- 5 195 485
- US-A- 5 450 829
- US-A- 5 553 575
- BECK ET AL: "Dual fuel diesel methane injection" AUTOMOTIVE ENGINEERING, vol. 97, no. 9, 1 September 1989, WARRENDALE US, pages 17-23, XP000117891

## Description

### TECHNICAL FIELD

The present invention relates to a method of controlling the injection of a dual-fuel diesel-gas engine injection system, and relative injection system.

### BACKGROUND ART

As is known, dual-fuel diesel-gas engines employ two different fuels, i.e. diesel fuel and gas (typically methane), and present the drawback, under certain operating conditions, of a high level of pollution and low engine efficiency. When the engine is highly choked, in fact, the air-gas mixture supplied to it is poor and, at times, the amount of gas supplied is not enough to ignite the air-gas mixture (mixture below the ignition level), so that combustion failure of the air-gas mixture results, thus impairing the thermodynamic efficiency of the engine, producing unburnt gas at the exhaust and so increasing the amount of pollutants emitted.

Conversely, supplying a sufficient amount of gas to ignite the air-gas mixture results in a considerable increase in consumption and in quantized as opposed to gradual power output, i.e. an impulsive as opposed to linear progression of the engine.

US-A-5 195 485 discloses an invention directed to reducing or eliminating smoke emissions during idling of a two cylinder bank locomotive engine resulting from unburned hydrocarbons due to the presence of a lower compression ratio piston which is present with a converted dual fuel operated engine. During idling, one cylinder bank of the engine is cut out an a timed alternating basis, thus forcing the remaining operating cylinders to work twice as hard. Consequently, the fuel fed to the remaining operating cylinders burns more efficiently, thus reducing significantly the level of unburned hydrocarbons and the amount of smoke emissions. A timer alternates between the cylinder banks anywhere from fifteen seconds to four minutes.

US-A-4 463 734 discloses a method of controlling the injection system of an unthrottled dual-fuel diesel-gas engine and an injection system for such an engine.

### DISCLOSURE OF INVENTION

It is an object of the present invention to provide an injection control method and injection system designed to eliminate the aforementioned drawbacks in a straightforward, low-cost manner.

According to the present invention, there is provided a method of controlling injection of an injection system of an unthrottled dual-fuel diesel-gas engine, as defined in claim 1.

According to the present invention, there is also provided an injection system for an unthrottled dual-fuel diesel-gas engine, as defined in claim 6.

### BRIEF DESCRIPTION OF DRAWINGS

A preferred, non-limiting embodiment of the present invention will be described by way of example with reference to the accompanying drawings, in which:
Figure 1 shows a simplified diagram of a dual-fuel diesel-gas engine injection system in accordance with the present invention;
Figure 2 shows a flow chart of the method according to the invention.

### BEST MODE FOR CARRYING OUT THE INVENTION

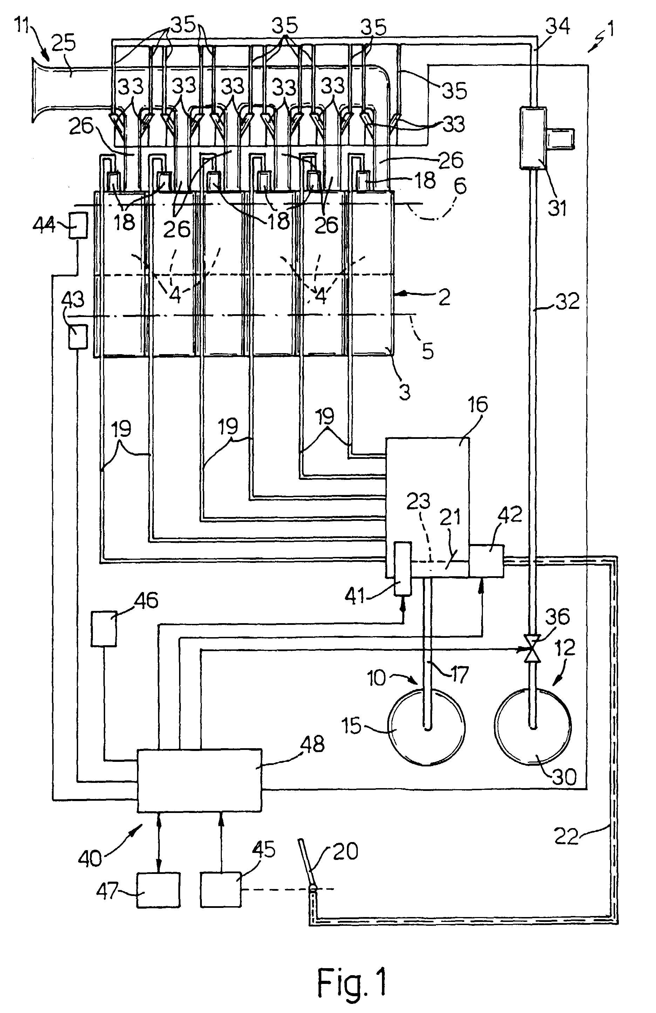

Number 1 in Figure 1 indicates an injection system for a dual-fuel diesel-gas engine 2 comprising a block 3, cylinders 4, a drive shaft 5 and a camshaft 6 (the last two being indicated by dot-and-dash lines).

Injection system 1 comprises a diesel fuel supply circuit 10, an air supply circuit 11, and a gas (typically methane) supply circuit 12.

Diesel fuel supply circuit 10 - of known type and shown schematically - comprises a tank 15; an injection pump 16 connected to tank 15 by a low-pressure delivery line 17; and a number of injectors 18 for injecting diesel fuel into cylinders 4, and connected to injection pump 16 by respective high-pressure delivery lines 19. Injection pump 16 is controlled in known manner by a control member 20, e.g. an accelerator pedal, via a control rod 21 and a transmission element 22. More specifically, control rod 21 acts on a rack 23 (shown by the dash line) forming part of injection pump 16 and for regulating the amount of diesel fuel supplied by injection pump 16.

Air supply circuit 11 - also of known type and shown schematically - comprises a main conduit 25 for drawing in air from the outside; and a number of secondary conduits 26 extending from main conduit 25, and connected to respective cylinders 4 to feed air from main conduit 25 into the combustion chambers of cylinders 4.

Gas supply circuit 12 comprises a high-pressure (roughly 200 bar) gas tank 30; a pressure regulator 31 connected to tank 30 by a high-pressure delivery line 32 to reduce the pressure of the gas inside tank 30 to 2-8 bar; a low-pressure delivery line 34 connected to pressure regulator 31; and a number of electroinjectors 33 connected to low-pressure delivery line 34 by a number of fittings 35.

In the example embodiment shown, electroinjectors 33 are arranged in pairs on secondary conduits 26 to inject gas into respective secondary conduits 26; and high-pressure delivery line 32 is fitted with a solenoid safety valve 36 for cutting off gas supply to electroinjectors 33 in the event of a fault on injection system 1.

Injection system 1 also comprises a control device 40 for controlling operation of engine 2 according to the method of the present invention.

Control device 40 comprises a known selective decoupling device 41, not described in detail, for selectively disconnecting control member 20 from rack 23; and a regulating device 42 for regulating the position of rack 23. More specifically, device 42 for regulating rack 23 comprises a step motor for regulating the position of rack 23 when this is disconnected from control member 20, so that injection pump 16 supplies different quantities of diesel fuel. In the example described, regulating device 42 moves the rack continuously between various operating positions in which injection pump 16 supplies quantities of diesel fuel ranging between a minimum and a maximum for respectively supplying engine 2 at idling speed (i.e. supplying the so-called "minimum pilot light") and at higher speeds up to maximum (maximum pilot light).

Rack regulating device 42 also provides for regulating the position of rack 23 according to the rotation speed of drive shaft 5 (engine speed). As is known, the delivery of injection pump 16 increases alongside an increase in the speed of engine 2, on account of less diesel fuel leaking inside pumping elements (not shown) forming part of injection pump 16. Consequently, if rack 23 were to remain fixed in the assumed operating position regardless of the speed of engine 2, the delivery of injection pump 16 would increase; which drawback, however, is eliminated by the regulating device 42 so regulating the position of rack 23 as to maintain the delivery of injection pump 16 at the desired value alongside a variation in the speed of engine 2.

Control device 40 also comprises a speed sensor 43 located on drive shaft 5 and generating an RPM speed signal related to the rotation speed of drive shaft 5 (engine speed); a first position sensor 44 located on camshaft 6 and generating a first position signal Φ related to the angular position of camshaft 6 (engine stroke); a second position sensor 45 connected to control member 20 and generating a second position signal θ related to the position of control member 20; a temperature sensor 46 located at the exhaust (not shown) of engine 2 and generating a temperature signal T related to the exhaust gas (and hence engine) temperature; a memory 47 in which an electronic map containing operating data is stored; and an electronic central control unit 48 receiving signals θ, Φ, RPM and T, connected to memory 47, and generating a number of control signals for gas electroinjectors 33, selective decoupling device 41, regulating device 42, and solenoid safety valve 36.

Control device 40 also comprises further sensors (not shown) supplying electronic central control unit 48 with respective output signals to enable unit 48 to monitor operation of injection system 1. More specifically, provision may be made for: a further temperature sensor on the engine radiator, to generate a temperature signal related to the cooling water temperature; an air pressure sensor on main air intake conduit 25, to generate a pressure signal related to the air pressure in main conduit 25; and a gas pressure sensor on low-pressure delivery line 34 of gas supply circuit 12, to generate a pressure signal related to the gas pressure on delivery line 34.

According to the present invention, electronic central control unit 48 controls the injection of diesel fuel and gas inside each cylinder 4 according to a modular strategy, i.e. by selectively supplying gas, at each engine cycle, to all or only some of cylinders 4 of engine 2 according to the power required of engine 2, by selecting the quantity of diesel fuel and gas supplied to each cylinder 4 at each engine cycle, and by selecting, at successive engine cycles, different cylinders 4 to be supplied with gas according to a predetermined rotation scheme to optimize the periodic irregularity of engine 2, and so provide for optimum steady operation and an optimum noise level of engine 2.

More specifically, at each engine cycle and on the basis of speed signal RPM and position signals Φ, θ, electronic central control unit 48 determines the number of electroinjectors 33 to be activated, the quantity of diesel fuel to be injected into each cylinder, and which electroinjectors 33 are to be operated to achieve the total power required of engine 2, while at the same time ensuring the quantity of gas injected by each electroinjector 33 is sufficient to ignite the respective air-gas mixture (mixture above the ignition level). By only supplying gas to some of cylinders 4, the power supplied by engine 2 is therefore lower than that which would be supplied if all the cylinders were to be supplied with gas with the air-gas mixture over the ignition level, and with no increase in consumption and no reduction in engine efficiency.

More specifically, using, as in the Figure 1 example, an engine 2 with six cylinders 4 and two ON/OFF gas electroinjectors 33 per cylinder 4, engine 2 may be injected, at each engine cycle, with a quantity of gas at thirteen levels, ranging from a minimum level at which none of gas electroinjectors 33 is supplied, and a maximum level at which all twelve gas electroinjectors 33 are supplied.

The quantity of diesel fuel injected into cylinders 4 by injectors 18, on the other hand, is only regulated continuously, as stated, to regulate the pilot light level. In the example described, the quantity of diesel fuel injected into each cylinder 4 ranges between two distinct levels - a minimum and a maximum - respectively corresponding to supply of engine 2 at idling speed (minimum pilot light) and at a higher and maximum speed (maximum pilot light). Dual regulation as described - modular for the gas and continuous for the diesel fuel - therefore provides for achieving a large number of power output levels of engine 2 at each engine cycle.

The power output of engine 2 may be further modulated by appropriately selecting the number of electroinjectors 33 used at successive engine cycles. More specifically, electronic central control unit 48 is capable of controlling the supply of each cylinder 4 in a series of successive engine cycles and on the basis of a predetermined strategy.

Over a number of successive engine cycles, in each of which only some of cylinders 4 are supplied, engine 2 therefore supplies on average the power required, even when highly choked.

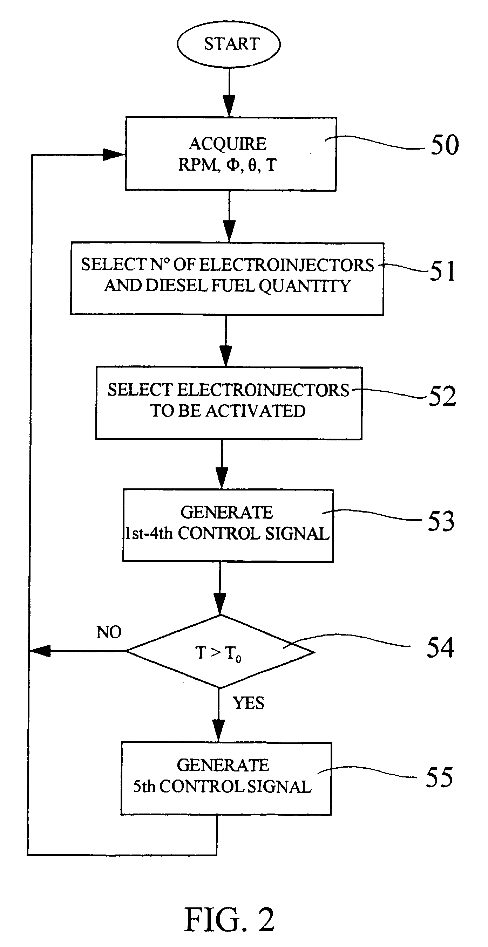

As shown in Figure 2, to implement the modular strategy described above, electronic central control unit 48 first acquires signals θ, Φ, RPM and T (block 50).

On the basis of signals θ and RPM, electronic central control unit 48 then selects (block 51) certain operating data stored in memory 47 and containing information relative to the number of electroinjectors 33 to be activated at each engine cycle and the quantity of diesel fuel to be injected at each engine cycle into each cylinder 4 (pilot light level).

On the basis of signals θ, Φ and RPM, electronic central control unit 48 then determines (block 52) the most appropriate modular strategy, i.e. selects which gas electroinjectors 33 are to be activated at each engine cycle.

Electronic central control unit 48 then generates (block 53) a first control signal to open each electroinjector 33 to be activated; generates a second control signal for selective decoupling device 41 to disconnect control member 20 from rack 23; generates, on the basis of the selected quantity of diesel fuel to be injected into respective cylinder 4 by each injector 18, a third control signal for regulating device 42 regulating the position of rack 23; and generates a fourth control signal for regulating device 42, on the basis of the third control signal and speed signal RPM, so as to maintain the quantity of diesel fuel supplied by injection pump 16 at the desired value alongside a variation in the speed of engine 2.

Finally, as excessively high exhaust gas temperatures may seriously damage the exhaust valves of the engine and, on supercharged engines, the turbine of the turbosupercharger, electronic central control unit 48 determines the exhaust gas temperature of engine 2 on the basis of temperature signal T. More specifically, central control unit 48 compares temperature signal T with a predetermined threshold value Tₒ (block 54); if temperature signal T is below threshold value Tₒ (NO output of block 54), block 54 goes back to block 50, and the operations described as of block 50 are repeated; conversely, if temperature signal T is above the predetermined threshold value Tₒ (YES output of block 54), central control unit 48 generates a fifth control signal to disable some of the electroinjectors 33 to be activated, and so reduce the quantity of gas supplied to and the temperature of engine 2 (block 55). Block 55 then goes back to block 50, and the operations described as of block 50 are repeated.

The advantages of the control method according to the present invention will be clear from the foregoing description. In particular, the modular gas injection control method described above provides for achieving the required power output of engine 2 with no cylinders 4 in which the air-gas mixture is below the ignition level, thus reducing the pollution level and increasing the efficiency of engine 2 as compared with known dual-fuel engines.

Moreover, rotationally controlling which cylinders 4 are to be supplied provides for optimizing operation of engine 2.

Finally, the injection control method described above is easy to implement; and control device 40 is inexpensive to produce, and requires no structural alterations to the injection system over and above implementation of the injection strategy by central control unit 48.

Clearly, changes may be made to the control method and injection system 1 as described and illustrated herein without, however, departing from the scope of the present invention as defined in the appended claims.

For example, the number of electroinjectors 33 associated with each cylinder 4 may be other than described. In particular, each cylinder 4 may be provided with one electroinjector 33 capable of injecting different quantities of gas into cylinder 4; and the quantity of gas injected by each electroinjector may vary continuously by varying the injection time of each electroinjector 33.

Moreover, as control member 20 need not necessarily be connected to rack 23 of injection pump 16, control device 40 described above need not necessarily comprise selective decoupling device 41 for disconnecting control member 20 from rack 23, and the position of rack 23 may be regulated directly by electronic central control unit 48 via regulating device 42.

Finally, in the case of an electronically injected diesel engine 2 in which diesel fuel injection pump 16 supplies diesel fuel to injectors 18 at a predetermined pressure, central control unit 48 directly controls the quantity of diesel fuel supplied to injectors 18 at each engine cycle by acting on the injection time of injectors 18, in which case, regulating device 42 may also be dispensed with.

## Claims

1. A method of controlling injection of an injection system (1) of a unthrottled dual-fuel diesel-gas engine (2) comprising a number of cylinders (4); characterized by comprising the steps of:
- selectively supplying, at each engine cycle, gas to at least some of said cylinders (4) of said engine (2) according to the power required in all operating conditions of said engine (2);
- selecting the quantity of diesel fuel and gas supplied to each of said cylinders (4) ; and
- selecting, at successive engine cycles, different cylinders (4) to be supplied with gas according to a predetermined rotation scheme.

2. A method as claimed in Claim 1, for an injection system (1) comprising a number of gas electroinjectors (33) and a number of diesel fuel injectors (18) associated with respective cylinders (4); a diesel fuel injection pump (16) having a rack (23) for regulating the quantity of diesel fuel supplied by said injection pump (16); and a control member (20) for controlling said rack (23); said method being characterized by comprising the steps of:
- generating a speed signal (RPM) related to the speed of said engine (2);
- generating a first position signal (Φ) related to the stroke of said engine (2);
- generating a second position signal (θ) related to the position of said control member (20);
- selecting, at each engine cycle and on the basis of said speed signal (RPM) and said position signals (Φ, θ), the number of electroinjectors (33) to be activated, a quantity of diesel fuel to be injected into each of said cylinders (4), and the electroinjectors (33) to be activated.

3. A method as claimed in Claim 2, characterized by comprising, for an injection system (1) comprising selective decoupling means (41) for disconnecting said control member (20) from said rack (23) and regulating means (42) for regulating the position of said rack (23), the steps of:
- generating a first control signal for each of the electroinjectors (33) to be activated;
- generating a second control signal for said selective decoupling means (41);
- generating, on the basis of said selected quantity of diesel fuel, a third control signal for said regulating means (42) regulating said rack (23); and
- generating, on the basis of said third control signal and said speed signal (RPM), a fourth control signal for said regulating means (42) regulating the position of said rack (23), so that the quantity of diesel fuel supplied by said injection pump (16) is maintained constant alongside a variation in the speed of said engine (2).

4. A method as claimed in Claim 3, characterized by also comprising the steps of:
- generating a temperature signal (T) of said engine (2);
- comparing said temperature signal (T) with a predetermined threshold value (Tₒ); and
- generating a fifth control signal to reduce the quantity of gas supplied to said engine (2) in the event said temperature signal (T) exceeds said predetermined threshold value (Tₒ).

5. A method as claimed in Claim 9, characterized in that said step of generating a fifth control signal to reduce the quantity of gas supplied to said engine (2) comprises the step of disabling some of said electroinjectors (33) to be activated.

6. An injection system (1) for an unthrottled dual-fuel diesel-gas engine (2) comprising a number of cylinders (4); characterized by comprising selective gas supply means (12, 47, 48, 51, 52) for selectively supplying gas, at each engine cycle, to at least some of said cylinders (4) of said engine (2) according to the power required in all operating conditions of said engine (2); said selective gas supply means (12, 47, 48, 51, 52) comprising first selecting means (47, 48, 51) for selecting the quantity of diesel fuel and gas supplied to each of said cylinders (4) and second selecting means (48, 52) for selecting, at successive engine cycles, different cylinders (4) to be supplied with gas according to a predetermined rotation scheme.

7. A system as claimed in Claim 6 , for an injection system (1) comprising a number of gas electroinjectors (33) and a number of diesel fuel injectors (18) associated with respective cylinders (4); a diesel fuel injection pump (16) having a rack (23) for regulating the quantity of diesel fuel supplied by said injection pump (16); and a control member (20) for controlling said rack (23); said system (1) being characterized by comprising:
- speed sensing means (43) generating a speed signal (RPM) related to the speed of said engine (2);
- first position sensing means (44) generating a first position signal (Φ) related to the stroke of said engine (2);
- second position sensing means (45) generating a second position signal (θ) related to the position of said control member (20);
- third selecting means (47, 48, 51, 52) for selecting, at each engine cycle and on the basis of said speed signal (RPM) and said position signals (Φ, θ), the number of electroinjectors (33) to be activated, a quantity of diesel fuel to be injected into each cylinder (4), and the electroinjectors (33) to be activated.

8. A system as claimed in Claim 7, characterized by comprising:
- selective decoupling means (41) for disconnecting said control member (20) from said rack (23);
- regulating means (42) for regulating the position of said rack (23);
- first signal generating means (53) generating a first control signal for each of the electroinjectors (33) to be activated;
- second signal generating means (53) generating a second control signal for said selective decoupling means (42);
- third signal generating means (53) generating, on the basis of said selected quantity of diesel fuel, a third control signal for said regulating means (42) regulating the position of said rack (23); and
- fourth signal generating means (53) receiving said third control signal and said speed signal (RPM), and generating a fourth control signal for said regulating means (42) regulating the position of said rack (23), so that the quantity of diesel fuel supplied by said injection pump (16) is maintained constant alongside a variation in the speed of said engine (2).

9. A system as claimed in Claim 8, characterized by also comprising:
- temperature sensing means (46) for generating a temperature signal (T) of said engine (2);
- comparing means (54) for comparing said temperature signal (T) with a predetermined threshold value (Tₒ); and
- fifth signal generating means (55) for generating a fifth control signal to reduce the quantity of gas supplied to said engine (2) in the event said temperature signal (T) exceeds said predetermined threshold value (Tₒ).

## Patentansprüche

1. Verfahren zur Einspritzsteuerung eines Einspritzsystems (1) eines ungedrosselten Zweistoff- bzw. Diesel-/Gasmotors (2), der eine Anzahl von Zylindern (4) aufweist; gekennzeichnet durch die folgenden Schritte:
- bei jedem Motorzyklus selektives Zuführen von Gas zu zumindest einigen der Zylinder (4) des Motors (2) in Abhängigkeit von der bei sämtlichen Betriebsbedingungen des Motors (2) erforderlichen Motorleistung;
- Auswählen der Menge an Dieselkraftstoff und Gas, die jedem der Zylinder (4) zugeführt wird; und
- bei aufeinanderfolgenden Motorzyklen Auswählen von verschiedenen Zylindern, denen in Abhängigkeit von einem vorbestimmten Rotationsschema Gas zuzuführen ist.

2. Verfahren nach Anspruch 1 für ein Einspritzsystem (1), das folgendes aufweist:
eine Anzahl von elektrischen Gaseinspritzventilen (33) und eine Anzahl von Dieselkraftstoff-Einspritzventilen (18), die jeweiligen Zylindern (4) zugeordnet sind; eine Dieselkraftstoff-Einspritzpumpe (16) mit einer Zahnstange (23) zum Regulieren der von der Einspritzpumpe (16) zugeführten Dieselkraftstoffmenge; und
ein Steuerelement (20) zum Steuern der Zahnstange (23); wobei das Verfahren durch die folgenden Schritte gekennzeichnet ist:
- Erzeugen eines auf die Drehzahl des Motors (2) bezogenen Drehzahlsignals (RPM) ;
- Erzeugen eines auf den Hub des Motors (2) bezogenen ersten Positionssignals (Φ) ;
- Erzeugen eines auf die Position des Steuerelements (20) bezogenen zweiten Positionssignals (θ) ;
- bei jedem Motorzyklus und auf der Basis des Drehzahlsignals (RPM) und der Positionssignale (Φ, θ) Auswählen der Anzahl von zu aktivierenden elektrischen Einspritzventilen (33), einer in jeden der Zylinder (4) einzuspritzenden Dieselkraftstoffmenge, und der zu aktivierenden elektrischen Einspritzventile (33).

3. Verfahren nach Anspruch 2,
dadurch gekennzeichnet,
daß es für ein Einspritzsystem (1), das eine selektive Entkopplungseinrichtung (41) zum Trennen des Steuerelements (20) von der Zahnstange (23) sowie eine Reguliereinrichtung (42) zum Regulieren der Position der Zahnstange (23) aufweist, die folgenden Schritte aufweist:
- Erzeugen eines ersten Steuersignals für jedes der zu aktivierenden elektrischen Einspritzventile (33) ;
- Erzeugen eines zweiten Steuersignals für die selektive Entkopplungseinrichtung (41);
- auf der Basis der ausgewählten Dieselkraftstoffmenge Erzeugen eines dritten Steuersignals für die die Zahnstange (23) regulierende Reguliereinrichtung (42) ; und
- auf der Basis des dritten Steuersignals und des Drehzahlsignals (RPM) Erzeugen eines vierten Steuersignals für die die Position der Zahnstange (23) regulierende Reguliereinrichtung (42), so daß die von der Einspritzpumpe (16) zugeführte Dieselkraftstoffmenge bei einer Änderung der Drehzahl des Motors (2) konstant gehalten wird.

4. Verfahren nach Anspruch 3,
ferner gekennzeichnet durch die folgenden Schritte:
- Erzeugen eines Temperatursignals (T) des Motors (2) ;
- Vergleichen des Temperatursignals (T) mit einem vorbestimmten Schwellenwert (Tₒ) ; und
- Erzeugen eines fünften Steuersignals, um die dem Motor (2) zugeführte Gasmenge dann zu reduzieren, wenn das Temperatursignal (T) den vorbestimmten Schwellenwert (Tₒ) überschreitet.

5. Verfahren nach Anspruch 4,
dadurch gekennzeichnet,
daß der Schritt des Erzeugens eines fünften Steuersignals, um die dem Motor (2) zugeführte Gasmenge zu reduzieren, den Schritt des Sperrens von einigen der zu aktivierenden elektrischen Einspritzventile (33) aufweist.

6. Einspritzsystem (1) für einen ungedrosselten Zweistoffbzw. Diesel-/Gasmotor (2), der eine Anzahl von Zylindern (4) aufweist,
dadurch gekennzeichnet,
daß es selektive Gaszuführungseinrichtungen (12, 47, 48, 51, 52) aufweist, um bei jedem Motorzyklus Gas selektiv zu zumindest einigen der Zylinder (4) des Motors (2) in Abhängigkeit von der bei sämtlichen Betriebsbedingungen des Motors (2) erforderlichen Motorleistung zuzuführen; wobei die selektiven Gaszuführungseinrichtungen (12, 47, 48, 51, 52) folgendes aufweisen: erste Wähleinrichtungen (47, 48, 51), um die Dieselkraftstoff- und Gasmenge, die jedem der Zylinder (4) zugeführt wird, zu wählen, und zweite Wähleinrichtungen (48, 52), um bei aufeinanderfolgenden Motorzyklen verschiedene Zylinder (4) zu wählen, denen in Abhängigkeit von einem vorbestimmten Rotationsschema Gas zuzuführen ist.

7. System nach Anspruch 6 für ein Einspritzsystem (1), das folgendes aufweist:
eine Anzahl von elektrischen Gaseinspritzventilen (33) und eine Anzahl von Dieselkraftstoff-Einspritzventilen (18), die jeweiligen Zylindern (4) zugeordnet sind; eine Dieselkraftstoff-Einspritzpumpe (16) mit einer Zahnstange (23) zum Regulieren der von der Einspritzpumpe (16) zugeführten Dieselkraftstoffmenge; und ein Steuerelement (20) zum Steuern der Zahnstange (23), wobei das System (1) gekennzeichnet ist durch:
- eine Drehzahlerfassungseinrichtung (43), die ein auf die Drehzahl des Motors (2) bezogenes Drehzahlsignal (RPM) erzeugt;
- eine erste Positionserfassungseinrichtung (44), die ein auf den Hub des Motors (2) bezogenes erstes Positionssignal (Φ) erzeugt;
- eine zweite Positionserfassungseinrichtung (45), die ein auf die Position des Steuerelements (20) bezogenes zweites Positionssignal (θ) erzeugt;
- dritte Wähleinrichtungen (47, 48, 51, 52), um bei jedem Motoryklus und auf der Basis des Drehzahlsignals (RPM) und der Positionssignale (Φ, θ) die Anzahl von zu aktivierenden elektrischen Einspritzventilen (33), sine in jeden Zylinder (4) einzuspritzende Dieselkraftstoffmenge und zu aktivierende elektrische Einspritzventile (33) zu wählen.

8. System nach Anspruch 7,
gekennzeichnet durch:
- eine selektive Entkopplungseinrichtung (41) zum Trennen des Steuerelements (20) von der Zahnstange (23) ;
- eine Reguliereinrichtung (42) zum Regulieren der Position der Zahnstange (23);
- eine erste Signalerzeugungseinrichtung (53), die ein erstes Steuersignal für jedes der zu aktivierenden elektrischen Einspritzventile (33) erzeugt;
- eine zweite Signalerzeugungseinrichtung (53), die ein zweites Steuersignal für die selektive Entkopplungseinrichtung (42) erzeugt;
- eine dritte Signalerzeugungseinrichtung (53), die auf der Basis der gewählten Dieselkraftstoffmenge ein drittes Steuersignal für die die Position der Zahnstange (23) regulierende Reguliereinrichtung (42) erzeugt; und
- eine vierte Signalerzeugungseinrichtung (53), die das dritte Steuersignal und das Drehzahlsignal (RPM) empfängt und ein viertes Steuersignal für die die Position der Zahnstange (23) regulierende Reguliereinrichtung (42) erzeugt, so daß die von der Einspritzpumpe (16) zugeführte Dieselkraftstoffmenge bei einer Änderung der Drehzahl des Motors (2) konstant gehalten wird.

9. System nach Anspruch 8,
ferner gekennzeichnet durch:
- eine Temperaturerfassungseinrichtung (46) zum Erzeugen eines Temperatursignals (T) des Motors (2) ;
- eine Vergleichseinrichtung (54) zum Vergleichen des Temperatursignals (T) mit einem vorbestimmten Schwellenwert (Tₒ) ; und
- eine fünfte Signalerzeugungseinrichtung (55) zum Erzeugen eines fünften Steuersignals, um die dem Motor (2) zugeführte Gasmenge dann zu reduzieren, wenn das Temperatursignal (T) den vorbestimmten Schwellenwert (Tₒ) überschreitet.

## Revendications

1. Procédé pour commander l'injection d'un système d'injection (1) d'un moteur à deux carburants Diesel-gaz sans étrangleur (2) comportant plusieurs cylindres (4), caractérisé en ce qu'il comporte les étapes consistant à :
- alimenter de manière sélective, au niveau de chaque cycle moteur, du gaz dans au moins certains desdits cylindres (4) dudit moteur (2) en fonction de la puissance requi'se dans toutes les conditions de fonctionnement dudit moteur (2),
- sélectionner la quantité de carburant Diesel et de gaz alimentés dans chacun desdits cylindres (4), et
- sélectionner, à des cycles moteur successifs, des cylindres différents (4) à alimenter en gaz en fonction d'un schéma de rotation prédéterminé.

2. Procédé selon la revendication 1, pour un système d'injection (1) comportant plusieurs électro-injecteurs de gaz (33) et plusieurs injecteurs de carburant Diesel (18) associés à des cylindres respectifs (4), une pompe d'injection de carburant Diesel (16) ayant une crémaillère (23) pour réguler la quantité de carburant Diesel alimenté par ladite pompe d'injection (16), et un élément de commande (20) pour commander ladite crémaillère (23), ledit procédé étant caractérisé en ce qu'il comporte les étapes consistant à :
- générer un signal de vitesse (RPH) associé à la vitesse dudit moteur (2),
- générer un premier signal de position (Φ) associé à la course dudit moteur (2),
- générer un second signal de position (θ) associé à la position dudit élément de commande (20),
- sélectionner, à chaque cycle moteur et sur la base dudit signal de vitesse (RPM) et desdits signaux de position (Φ, θ), le nombre d'électro-injecteurs (33) à activer, une quantité de carburant Diesel à injecter dans chacun desdits cylindres (4), et les électro-injecteurs (33) à activer.

3. Procédé selon la revendication 2, caractérisé en ce qu'il comporte, pour un système d'injection (1) comportant des moyens de découplage sélectif (41) pour déconnecter ledit élément de commande (20) de ladite crémaillère (23) et des moyens de régulation (42) pour réguler la position de ladite crémaillère (23), les étapes consistant à :
- générer un premier signal de commande pour chacun des électro-injecteurs (33) à activer,
- générer un deuxième signal de commande pour lesdits moyens de découplage sélectif (41),
- générer, sur 1a base de ladite quantité sélectionnée de carburant Diesel, un troisième signal de commande pour lesdits moyens de régulation (42) régulant ladite crémaillère (23), et
- générer, sur la base dudit troisième signal de commande et dudit signal de vitesse (KPM) , un quatrième signal de commande pour lesdits moyens de régulation (42) régulant la position de ladite crémaillère (23), de sorte que la quantité de carburant Diesel alimenté par ladite pompe d'injection (16) est maintenue constante pendant une variation de la vitesse dudit moteur (2).

4. Procédé selon la revendication 3, caractérisé en ce qu'il comporte également les étapes consistant à :
- générer un signal de température (T) dudit moteur (2),
- comparer ledit signal de température (T) et une valeur de seuil prédéterminée (T₀), et
- générer un cinquième signal de commande pour réduire la quantité de gaz alimenté dans ledit moteur (2) dans le cas où ledit signal de température (T) dépasse ladite valeur de seuil prédéterminée (T₀).

5. Procédé selon la revendication 4, caractérisé en ce que ladite étape de génération d'un cinquième signal de commande pour réduire la quantité de gaz alimenté dans ledit moteur (2) comporte l'étape consistant à interdire l'activation de certains desdits électro-injecteurs (33).

6. Système d'injection (1) pour un moteur à deux carburants Diesel-gaz sans étrangleur (2) comportant plusieurs cylindres (4), caractérisé en ce qu'il comporte des moyens d'alimentation sélective en gaz (12, 47, 48, 51, 52) pour alimenter de manière sélective du gaz, à chaque cycle moteur, dans au moins certains desdits cylindres (4) dudit moteur (2) en fonction de la puissance requise dans toutes les conditions de fonctionnement dudit moteur (2), lesdits moyens d'alimentation sélective en gaz (12, 47, 48, 51, 52) comportant des premiers moyens de sélection (47, 48, 51) pour sélectionner la quantité de carburant Diesel et de gaz alimentée dans chacun desdits cylindres (4) et des seconds moyens de sélection (48, 52) pour sélectionner, à des cycles moteur successifs, différents cylindres (4) à alimenter en gaz en fonction d'un schéma de rotation prédéterminé.

7. Système selon la revendication 6, pour un système d'injection (1) comportant plusieurs électro-injecteurs de gaz (33) et plusieurs injecteurs de carburant Diesel (18) associés à des cylindres respectifs (4), une pompe d'injection de carburant Diesel (16) ayant une crémaillère (23) pour réguler la quantité de carburant Diesel alimenté par ladite pompe d'injection (16), et un élément de commande (20) pour commander ladite crémaillère (23), ledit système (1) étant caractérisé en ce qu'il comporte :
- des moyens de détection de vitesse (43) générant un signal de vitesse (RPM) associé à la vitesse dudit moteur (2),
- des premiers moyens de détection de position (44) générant un premier signal de position (Φ) associé à la course dudit moteur (2),
- des seconds moyens de détection de position (45) générant un second signal de position (θ) associé à la position dudit élément de commande (20),
- des troisièmes moyens de sélection (47, 48, 51, 52) pour sélectionner, à chaque cycle moteur et sur la base dudit signal de vitesse (RPM) et desdits signaux de position (Φ, θ), le nombre d'électro-injecteurs (33) à activer, une quantité de carburant Diesel à injecter dans chaque cylindre (4), et les électro-injectaurs (33) à activer.

8. Système selon la revendication 7, caractérisé en ce qu'il comporte :
- des moyens de découplage sélectif (41) pour déconnecter ledit élément de commande (20) de ladite crémaillère (23),
- des moyens de régulation (42) pour réguler la position de ladite crémaillère (23),
- des premiers moyens de génération de signal (53) générant un premier signal de commande de chacun des électro-injecteurs (33) à activer,
- des deuxièmes moyens de génération de signal (53) générant un deuxième signal de commande desdits moyens de découplage sélectif (42),
- des troisièmes moyens de génération de signal (53) générant, sur la base de ladite quantité sélectionnée de carburant Diesel, un troisième signal de commande desdits moyens de régulation (42) régulant la position de ladite crémaillère (23), et
- des quatrièmes moyens de génération de signal (53) recevant ledit troisième signal de commande et ledit signal de vitesse (RPM), et générant un quatrième signal de commande desdits moyens de régulation (42) régulant la position de ladite crémaillère (23), de sorte que la quantité de carburant Diesel alimenté par ladite pompe d'injection (16) est maintenue constante pendant une variation de la vitesse dudit moteur (2).

9. Système selon la revendication 8, caractérisé en ce qu'il comporte également :
- des moyens de détection de température (46) pour générer un signal de température (T) dudit moteur (2),
- des moyens de comparaison (54) pour comparer ledit signal de température (T) et une valeur de seuil prédéterminée (T₀), et
- des cinquièmes moyens de génération de signal (55) pour générer un cinquième signal de commande pour réduire la quantité de gaz alimenté dans ledit moteur (2) dans le cas où ledit signal de température (T) dépasse ladite valeur de seuil prédéterminée (T₀).
